# EUROPEAN PATENT APPLICATION

(11) **EP 4 343 106 A1**
(43) Date of publication of application: **27.03.2024**
(21) Application number: 22196731.8
(22) Date of filing: 20.09.2022
(51) Int. Cl.: E21B 7/02, E21B 44/00, G05D 1/02

(54) **DETERMINATION OF A ROUTE IN AN UNDERGROUND WORKSITE FOR A MINING VEHICLE**

(71) Applicant: Sandvik Mining and Construction Oy, 33330 Tampere (FI)
(72) Inventor: PUURA, Jussi, 33311 Tampere (FI); SIIVONEN, Lauri, 33311 Tampere (FI); LIIKANEN, Henri, 33311 Tampere (FI)
(74) Representative: Sandvik

(57) **Abstract**

According to an aspect, an apparatus may obtain map data associated with a tunnel system of an underground worksite, obtain a start position and an end position for a mining vehicle configured to operate in the tunnel system; obtain vehicle information comprising at least kinematic restrictions and space restrictions associated with structural body members of the mining vehicle and a movable work device of the mining vehicle, the kinematic restrictions comprising movability limits of the movable work device; and determine at least partly based on the map data, the start and end positions, and the vehicle information, a collision free continuous route between the start and end positions for the mining vehicle, the collision free continuous route having at least one collision free position for the movable work device within the movability limits of the movable work device along the collision free continuous route.

## Description

### TECHNICAL FIELD

Various example embodiments generally relate to the field of underground worksites and vehicles used therein. In particular, some example embodiments relate to a solution for determining a route for a vehicle in a tunnel system of an underground worksite.

### BACKGROUND

Mining or construction excavation worksites, such as underground hard rock or soft rock mines, use work machines, such as load and/or haul machines and drilling rigs, which may also be referred to as (mine) vehicles.

The vehicle may be provided with a boom and a mining work device or work machine on the boom. The boom may be moved during use between different working positions. The boom may also have a transport position, wherein when the boom is moved to the transport position in which the vehicle may be moved in the site to another location. However, especially in narrow tunnels, for example, in mines and some other kinds of sites the space for moving the vehicle may be limited wherein there may be a risk that the boom may hit a wall of the mine or another obstacle during moving the vehicle.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

Example embodiments may provide a solution that may enable planning a collision free continuous route for a mining vehicle to travel in a tunnel system of an underground worksite. This benefit may be achieved by the features of the independent claims. Further implementation forms are provided in the dependent claims, the description, and the drawings.

According to a first aspect, the is provided an apparatus for a mining vehicle, the apparatus comprising at least one processor and at least one memory including computer program code. The at least one memory and the computer program code are configured to, with the at least one processor, cause the apparatus at least to: obtain map data associated with a tunnel system of an underground worksite; obtain a start position and an end position for a mining vehicle configured to operate in the tunnel system; obtain mining vehicle information comprising at least kinematic restrictions and space restrictions associated with structural body members of the mining vehicle and a movable work device of the mining vehicle, the kinematic restrictions comprising movability limits of the movable work device; and determine at least partly based on the map data, the start and end positions, and the mining vehicle information, a collision free continuous route between the start and end positions for the mining vehicle, the collision free continuous route having at least one collision free position for the movable work device within the movability limits of the movable work device along the collision free continuous route.

In an example embodiment of the first aspect, the at least one memory and the computer program code are further configured to with the at least one processor, cause the apparatus at least to control visualization of the determined collision free continuous route.

In an example embodiment of the first aspect, the at least one memory and the computer program code are further configured to with the at least one processor, cause the apparatus at least to control the mining vehicle to drive through the determined collision free continuous route.

In an example embodiment of the first aspect, the at least one memory and the computer program code are further configured to with the at least one processor, cause the apparatus at least to use at least the map data, the route start and end points and different wall distances values to determine a plurality of candidate routes between the start and end points; use at least the map data and the mining vehicle information to improve at least one candidate route of the plurality of candidate routes while satisfying the kinematic restrictions and space restrictions associated with the mining vehicle and the movable work device of the mining vehicle; and choose, based on at least one criterion, a candidate route from the improved at least one candidate route as the collision free continuous route.

In an example embodiment of the first aspect, the movability limits of the movable work device limits horizontal and/or vertical movability of the movable work device.

In an example embodiment of the first aspect, the movability limits of the movable work device set at least two allowable preset positions for the movable work device.

In an example embodiment of the first aspect, the movability limits of the movable work device allow the movable work device to be moved steplessly within the movability limits.

In an example embodiment of the first aspect, the space restrictions associated with the mining vehicle comprises space restrictions separately for a rear body and a front body of the mining vehicle.

In an example embodiment of the first aspect, the movable work device comprises at least one boom or a bucket.

In an example embodiment of the first aspect, the at least one memory and the computer program code are further configured to with the at least one processor, cause the apparatus at least to determine the collision free continuous route before starting the collision free continuous route with the mining vehicle.

In an example embodiment of the first aspect, the start position and/or the end position comprises direction and/or orientation of the mining vehicle.

In an example embodiment of the first aspect, the start position and/or the end position comprises a position for each structural body member of the mining vehicle and/or the work device.

According to a second aspect, there is provided a mining vehicle comprising an apparatus according to the first aspect.

According to a third aspect, a method comprises obtaining map data associated with a tunnel system of an underground worksite; obtaining a start position and an end position for a mining vehicle configured to operate in the tunnel system; obtaining mining vehicle information comprising at least kinematic restrictions and space restrictions associated with structural body members of the mining vehicle and a movable work device of the mining vehicle, the kinematic restrictions comprising movability limits of the movable work device; and determining at least partly based on the map data, the start and end positions, and the mining vehicle information, a collision free continuous route between the start and end positions for the mining vehicle, the collision free continuous route having at least one collision free position for the movable work device within the movability limits of the movable work device along the collision free continuous route.

In an example embodiment of the third aspect, the method further comprises controlling visualization of the determined collision free continuous route.

In an example embodiment of the third aspect, the method further comprises controlling the mining vehicle to drive through the determined collision free continuous route.

In an example embodiment of the third aspect, the method further comprises using at least the map data, the route start and end points and different wall distances values to determine a plurality of candidate routes between the start and end points; using at least the map data and the mining vehicle information to improve at least one candidate route of the plurality of candidate routes while satisfying the kinematic restrictions and space restrictions associated with the mining vehicle and the movable work device of the mining vehicle; and choosing, based on at least one criterion, a candidate route from the improved at least one candidate route as the collision free continuous route.

In an example embodiment of the third aspect, the movability limits of the movable work device limits horizontal and/or vertical movability of the movable work device.

In an example embodiment of the third aspect, the movability limits of the movable work device set at least two allowable preset positions for the movable work device.

In an example embodiment of the third aspect, the movability limits of the movable work device allow the movable work device to be moved steplessly within the movability limits.

In an example embodiment of the third aspect, the space restrictions associated with the mining vehicle comprises space restrictions separately for a rear body and a front body of the mining vehicle.

In an example embodiment of the third aspect, the movable work device comprises at least one boom or a bucket.

In an example embodiment of the third aspect, the method further comprises determining the collision free continuous route before starting the collision free continuous route with the mining vehicle.

In an example embodiment of the third aspect, the start position and/or the end position comprises direction and/or orientation of the mining vehicle.

In an example embodiment of the third aspect, the start position and/or the end position comprises a position for each structural body member of the mining vehicle and/or the work device.

According to a fourth aspect a computer program comprises instructions for causing an apparatus to carry out the method of the third aspect.

According to a fifth aspect a computer readable medium comprises a computer program comprising instructions for causing an apparatus to carry out the method of the third aspect.

According to a sixth aspect, there is provided an apparatus comprising means for: obtaining map data associated with a tunnel system of an underground worksite; obtaining a start position and an end position for a mining vehicle configured to operate in the tunnel system; obtaining mining vehicle information comprising at least kinematic restrictions and space restrictions associated with structural body members of the mining vehicle and a movable work device of the mining vehicle, the kinematic restrictions comprising movability limits of the movable work device; and determining at least partly based on the map data, the start and end positions, and the mining vehicle information, a collision free continuous route between the start and end positions for the mining vehicle, the collision free continuous route having at least one collision free position for the movable work device within the movability limits of the movable work device along the collision free continuous route.

Many of the attendant features will be more readily appreciated as they become better understood by reference to the following detailed description considered in connection with the accompanying drawings.

### DESCRIPTION OF THE DRAWINGS

The accompanying drawings, which are included to provide a further understanding of the example embodiments and constitute a part of this specification, illustrate example embodiments and together with the description help to understand the example embodiments. In the drawings:
**FIG. 1** illustrates an example of an underground worksite according to an example embodiment.
**FIG. 2** illustrates an example of a method according to an example embodiment.
**FIG. 3A** illustrates one possible work device position according to an example embodiment.
**FIG. 3B** illustrates another possible work device position according to an example embodiment.
**FIG. 3C** illustrates another possible work device position according to an example embodiment.
**FIG. 4A** illustrates various mining vehicle characteristics according to an example embodiment.
**FIG. 4B** illustrates various mining vehicle characteristics according to an example embodiment.
**FIG. 5A** illustrates an example of a two-dimensional view of route planning according to an example embodiment.
**FIG. 5B** illustrates another example of a two-dimensional view of route planning according to an example embodiment.
**FIG. 6** illustrates an example visualization of a mining vehicle travelling in a curve of a tunnel system according to an example embodiment.
**FIG. 7** illustrates an example of an apparatus configured to practice one or more example embodiments.

Like references are used to designate like parts in the accompanying drawings.

### DETAILED DESCRIPTION

Reference will now be made in detail to example embodiments, examples of which are illustrated in the accompanying drawings. The detailed description provided below in connection with the appended drawings is intended as a description of the present examples and is not intended to represent the only forms, in which the present example may be constructed or utilized. The description sets forth the functions of the example and the sequence of steps for constructing and operating the example. However, the same or equivalent functions and sequences may be accomplished by different examples.

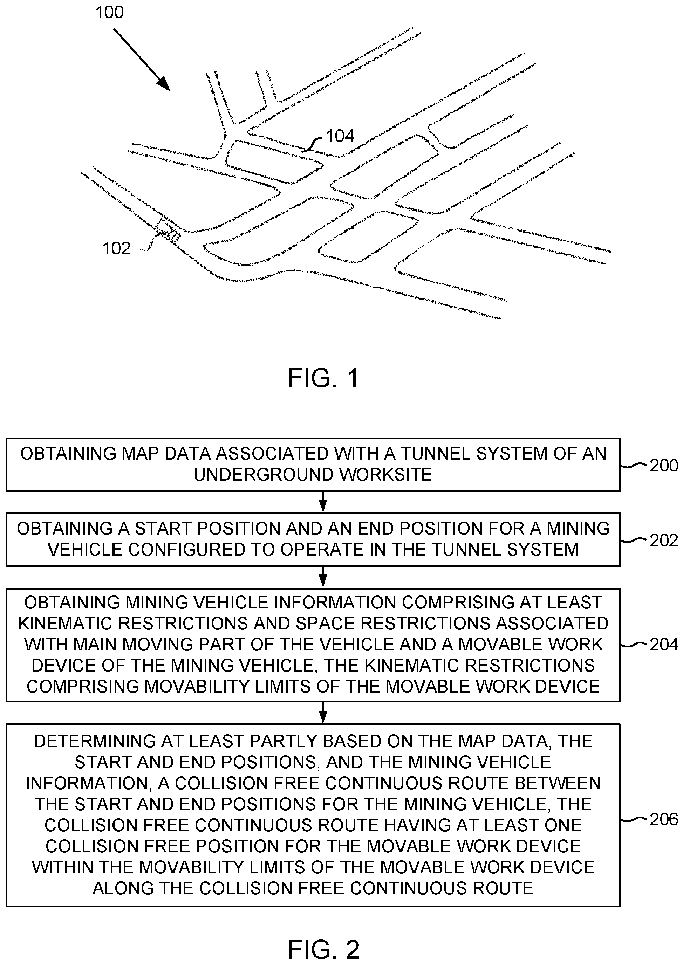

FIG. 1 illustrates an example of an underground worksite 100 according to an example embodiment. The underground worksite 100 comprises a tunnel system 104 comprising a network of underground tunnels. One or more mobile objects, such as persons or mobile work machines 102, below also referred to as vehicles or mining vehicles, may move between different areas or operation zones of the underground worksite 100. The mining vehicle 102 may be any type of mobile work machine suitable to be used in mine operations, such as lorries, dumpers, vans, mobile rock drilling or cutting rigs, mobile reinforcement machines, trucks, dumpers and bucket loaders. The mining vehicle may be an autonomously operating mining vehicle or an automated mining vehicle, which in its autonomous operating mode may operate/drive independently without requiring continuous user control but which may be taken under external control during states of emergencies, for example.

A three-dimensional (3D) (tunnel) model of the underground worksite may be available illustrating floors, walls, and ceilings of the tunnels. The model may comprise or be formed based on point cloud data generated on the basis of scanning the tunnel system. Point cloud data may comprise a plurality of data points representing, for example, distances between the mining vehicle and objects in the environment of the mobile mining vehicle at a particular time instance. An individual point included in a point cloud may be presented by, for example, X and Y coordinates, or X, Y and Z coordinates with respect to a particular coordinate frame. The 3D model may be stored in a database accessible by one or more modules of a computing apparatus, such as a route planning module. In other embodiments, the 3D model may be a design model or may be generated on the basis of a design model, such as a CAD model, created by a mine designing software or a 3D model created on the basis of tunnel lines and profiles designed in a drill and blast design software.

In complex 3D environments, such as underground mines, using the full 3D model of the tunnel system may be too complex and resource consuming. For example, more efficient route calculation of vehicles may be achieved on a map representing a particular part of the full 3D model such as a map that only comprises the floor of the mine, possibly with attributes associated with some or all of the floor points. The term floor model refers generally to a model comprising a set of points indicative of the tunnel floor at least in horizontal plane, for example, two-dimensional (2D) or x, y coordinates. Such points may also be referred to as floor points. The 3D model of the tunnel may comprise point cloud data generated on the basis of scanning the tunnel and the floor model is a point cloud model of the floor comprising a sub-set of points extracted from the 3D point cloud data for representing the floor of the tunnel. The floor model may comprise also a vertical plane, for example, height or z coordinate data and/or supplementary data for at least some of the floor points.

FIG. 2 illustrates an example of a method according to an example embodiment. The method may comprise a computer-implemented method implemented by an apparatus configured for determining a route plan, such as a server, a controller workstation, a mobile unit, such as a mobile cellular device or other type of mobile communications device, a vehicle on-board control device, or other kind of appropriately configured data processing device.

At 200 map data associated with a tunnel system of an underground worksite may be obtained. The map data may refer, for example, to a traversability map that comprises a floor map comprising additional information on characteristics of the tunnel floor affecting operation of the mining vehicle. A traversability map may comprise a floor map into which additional information, for example, relating to obstacle height, floor slope, height of space, ground quality etc., have been coded. In other words, each floor map point may or may not separately include this additional information.

At 202 a start position and an end position for a mining vehicle configured to operate in the tunnel system may be obtained. The start and end position may be obtained, for example, via user input from a user using an application program implementing the method, or based on map data. In an example embodiment, the start position and/or the end position may comprise direction and/or orientation of the mining vehicle. In an example embodiment, the start position and/or the end position may comprise a position for each structural body member of the mining vehicle and/or the working device.

At 204 mining vehicle information comprising at least kinematic restrictions and space restrictions associated with structural body members, for example, main moving body parts, of the vehicle and a movable work device of the vehicle may be obtained, the kinematic restrictions comprising movability limits of the movable work device. The kinematic restrictions may define, for example, one or more limitations for the vehicle, for example, body turning angles, wheel turning angles, speed restrictions etc. The movability limits of the movable work device may limit horizontal and/or vertical movability of the movable work device. For example, the movable work device may have a predefined number of preset horizontal positions in a horizontal plane, for example, left, center/straight and right, with respect to a longitudinal axis of a vehicle part or vehicle body part to which the movable work device is connected to. In another example embodiment, the movability may be possible only in the vertical direction in the case, for example, of a bucket. For example, the movable work device may have a predefined number of preset vertical positions, for example, down, nominal and up, with respect, for example, to a ground level. A nominal position may refer to a predefined position of the movable work device with respect to the mining vehicle, where the predefined position enables stable driving or tramming. The nominal position may be also referred to as an unadjusted position of the movable work device. The movable work device may be at least partially moved to another position from the nominal position, for example, for performing a task. Further, the movable work device may be at least partially moved to another position from the nominal position, for example, down or up position in order to avoid a collision.

In another example embodiment, the work device may be movable both in the horizontal plane and in the vertical positions. Further, instead of applying preset discrete positions, the movability may be steplessly controllable within a predefined control range. The term "steplessly" may refer, for example, to any small, even differentially small, increments with the movability limits of the movable work device. In an example embodiment, the space restrictions associated with the vehicle may comprise space restrictions separately for different body parts of the vehicle. For example, a first body such as a first carrier of the vehicle may have a different height and/or width than a second body such as a second carrier of the vehicle, a cabin of the vehicle may be higher than the first body and the second body etc.

At 206 a collision free continuous route between the start and end positions for the vehicle may be determined at least partly based on the map data, the start and end positions, and the mining vehicle information, the collision free continuous route having at least one collision free position for the movable work device within the movability limits of the movable work device along the collision free continuous route. Each location point in the collision free continuous route may have at least one collision free position for the movable work device. In an example embodiment, the collision free continuous route may have at least one collision free position for the movable work device within the movability limits of the movable work device at all locations along the collision free continuous route. In another example embodiment, the collision free continuous route may have at least one collision free position for the movable work device within the movability limits of the movable work device at selected locations along the collision free continuous route.

In an example embodiment, the determination of the collision free continuous route may be divided to a first and second stage. In the first stage, at least the map data, the route start and end points and different wall distances values may be used to determine a plurality of candidate routes between the start and end points. In an example embodiment, an orientation aware A* or Theta* planning algorithm, or in a meshed traversability map Dijkstra's algorithm, may be used to find the candidate routes. In the first stage the candidate routes may be rough approximations that the mining vehicle is not guaranteed to be able to drive. The first stage may be run multiple times with different wall distance values to generate multiple route candidates for further optimization. The wall distance value means, for example, that the route is not allowed go within a specified distance to a wall. In the second stage, at least the map data and the vehicle information may be used to improve at least one candidate route of the plurality of candidate routes while satisfying the kinematic restrictions and space restrictions associated with the vehicle and the movable work device of the vehicle. Improving at least one candidate route may comprise modifying the at least one candidate route such that operational efficiency of the mining vehicle on the route is increased. Improving may comprise, for example, at least one of optimizing the route to maximize at least one key performance indicator as the reward function, minimizing time to arrival, minimizing energy consumption, minimizing movements or steering effort, maximizing distance to known obstacles etc. For example, the second stage may take into account mining vehicle acceleration and deceleration capabilities and the maximum speed of steering. The second stage may also comprise checking that the route is clear from collisions by comparing body envelopes to the floor details at that spot in the map data. An envelope may generally refer to a 2D or 3D area indicative of space required by the vehicle or vehicle body members at the associated route position. The envelope may thus extend from outside outer dimensions of the vehicle to visualize the space the vehicle is expected to require at the route point. Further, in an example embodiment, the second stage may comprise morphing and optimizing the route spline until the candidate route fulfills required drivability restrictions and mining vehicle limitations. In an example embodiment, the second stage may also comprise checking the behavior of safety systems by applying forecasted collision envelopes at planned speeds against the map to avoid unintended triggering of the safety systems due to too large situation speeds. In every route point the mining vehicle's braking distance may be estimated based on the planned speed of the mining vehicle in that location. The mining vehicle's envelope may be forecasted for the braking distance and checked to be collision free. In case of collisions, the mining vehicle's speed or route may be adjusted to achieve a collision free continuous route. In an example embodiment, the second stage may also comprise, when designing the machine speed for the route, limiting the speed to the traffic rules and maximum speed limits of the mine.

A candidate route from the improved at least one candidate route may then be chosen, based on at least one criterion, as the collision free continuous route. The at least one criterion may comprise one or more criteria relating to operational efficiency of the mining vehicle and/or operational safety. The at least one criterion may comprise, for example, at least one of the fastest time of arrival, the largest margin to walls and/or obstacles and the shortest distance etc.

In an example embodiment, the apparatus may be configured to control visualization of the determined collision free continuous route. For example, the apparatus itself may be configured to provide the visualization via an output device, for example, a display, connected to, or being part of, the apparatus. In another example embodiment, the apparatus may be configured to transmit the determined collision free continuous route to another entity for visualization.

In an example embodiment, the apparatus may be configured to control the mining vehicle to drive through the determined collision free continuous route. In an example embodiment, the mining vehicle may be configured to autonomously drive through the determined collision free continuous route. In another example embodiment, the mining vehicle may be an automated mining vehicle, which in its autonomous operating mode may operate/drive independently without requiring continuous user control but which may be taken under external control if needed.

The solution discussed above may be used for providing a route to be driven by an unmanned autonomous mining vehicle. In an example embodiment, the autonomous mining vehicle may itself be configured to determine the route, or the determined route may be transmitted to the autonomous mining vehicle. In another example embodiment, the mining vehicle may be an automated unmanned or manned mining vehicle, which in its autonomous operating mode may operate/drive independently without necessarily requiring continuous user control but which may be taken under external control.

In another example embodiment, the determined route may be visualized and simulated without driving it. This may be advantageous, for example, when demonstrating to an interested party that a specific mining vehicle can operate in a specific tunnel system without collisions.

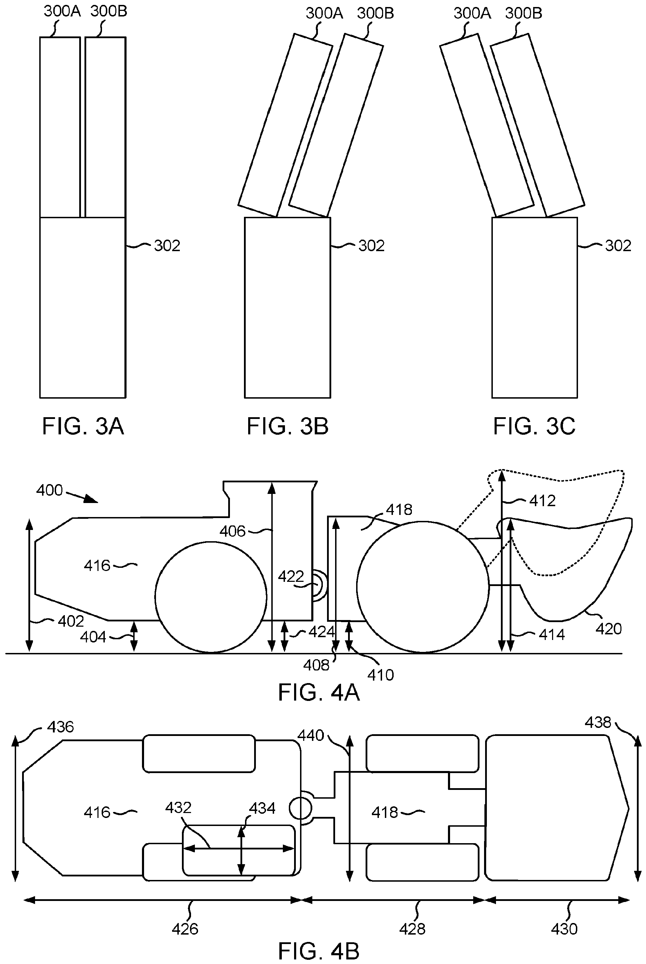

FIGS. 3A, 3B and 3C illustrate possible work device positions according to an example embodiment. A carrier 302 may be arranged to support at least one work device 300A, 300B, for example, a boom. The term "boom" used herein may refer to a boom or arm to which a work device can be connected, or to single entity that comprises both the arm and the work device. In this example, the work device 300A, 300B has three possible preset positions, left, center/straight and right, with respect to a longitudinal axis of the carrier 302. When a collision free continuous route between start and end positions has been determined for a mining vehicle, at each location along the route, the work device 300A, 300B may have at least one at least one collision free position. Thus the vehicle is able to travel the route without any collisions. The collision free continuous route may have more than one additional possible work device positions in addition to a most suitable work device position at each route point. If the vehicle comprises first and second bodies, the collision free continuous route may have a single path for the first and second bodies but many valid candidates for the work device positions. In an example embodiment, when traveling, the mining vehicle may be configured to try to utilize the straight position always or minimize transfers of the work device 300A, 300B from one position to another to maximize its stability.

FIGS. 3A-3C illustrate an example embodiment in which rotation or turning in a horizontal plane is allowed for the work device 300A, 300B. In another example embodiment, vertical movement may be allowed. For example, the work device may have a plurality of different vertical positions, for example, down, nominal and up positions, with respect, for example, to a ground level, and in each of these positions, the work device may be rotated or turned in a single horizontal plane, as illustrated in FIGS. 3A-3C. Further, instead of rotating the work device 300A, 300B in a horizontal plane, the work device may have different height positions, for example, down, nominal and up, for example, when using a bucket as the work device. In other words, the vertical position of the work device may vary.

When controlling a vehicle based on the determined collision free continuous route, the vehicle may be controlled to freely select between valid work device positions, giving it freedom to do smooth transitions and minimize movements/effort. The parts of the route where two or more positions are valid for the work device, may be considered as transfer portions of the route where work device movement is allowed during tramming. If only a single position is possible for the work device or the transfer section is short, the mining vehicle may have to stop for a moment in the transfer section to move the work device from a previously allowed position to a next one before continuing the tramming.

In order to allow the work device to fit through tight curves in the tunnel system of a worksite, the vehicle, for example, a loader may be allowed raise its bucket to drive over a slightly higher obstacle. Further, a plurality of alternative pre-set positions may be defined for the booms, buckets and implements of the mining vehicle to enable the mining vehicle to travel through the portions of a route in the tunnel system. In another example embodiment, instead of using pre-set positions, the booms, buckets and implements of the mining vehicle may be controlled in a stepless manner. In an example embodiment, the "stepless" may refer to a solution in which the control of the device is continuous between the moving limits, or to a solution in which there are numerous positions for the work device between the moving limits.

FIGS. 4A and 4B illustrates various vehicle characteristics according to an example embodiment. The illustrated mining vehicle characteristics may be regarded as space restrictions for a mining vehicle 400. A mining vehicle of the example of FIGS. 4A and 4B comprises structural body members such as a first body and a second body. The first body may comprise a front carrier in a forward driving direction and the second body may comprise a rear carrier following the front carrier in the forward driving direction. The first and the second bodies may be coupled via an articulation joint. Hence, the first and the second bodies may move relative to each other when the mining vehicle is steered. In the following, the first body is referred to as a front body and the second body is referred to as a rear body.

FIG. 4A discloses that the mining vehicle 400 has a rear body 416, a front body 418 and a work device 420, for example, a bucket. In another example embodiment, the mining vehicle 400 may have only a single body. The rear body 416 and the front body 418 may be movable with respect to each other with an articulation point 422.

For route determination purposes, the mining vehicle 400 may have different space restrictions for different parts or sections of the mining vehicle 400, for example, one or more of the following:
- rear body boxes minimum height 402
- rear body cabin minimum height 406
- front body boxes minimum height 408
- front body bucket minimum height 414
- front body bucket maximum height 412
- rear body boxes maximum bump 404
- rear body cabin maximum bump 424
- front body maximum bump 410
- rear body width 436
- front body bucket width 438
- front body width 440
- read body length 426
- front body length 428
- front body bucket length 430
- rear body cabin length 432
- rear body cabin width 434

When using information about the space restrictions of the mining vehicle, it is possible to determine which routes the mining vehicle can travel and cannot travel in the tunnel system between a start position and an end position. For example, the rear body of the mining vehicle may have a lower height than the rear body cabin part. This means that the rear body may travel closer to tunnel walls than the rear body cabin part. Similarly, when taking into account movability of the work device of the mining vehicle, the work device may be, for example, rotated in a horizontal plane to a position which helps travelling curve sections in the tunnel system.

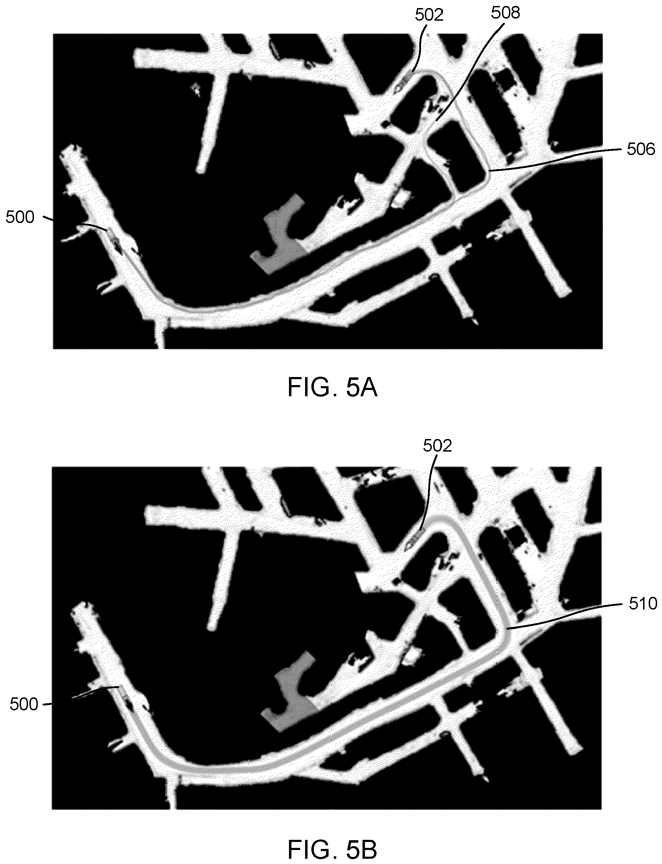

FIG. 5A illustrates an example of a two-dimensional view of route planning according to an example embodiment. FIG. 5A illustrates a first stage of a determination of a collision free continuous route. In the first stage, at least the map data, the route start and end points and different wall distances values may be used to determine a plurality of candidate routes between the start and end points. FIG. 5A illustrates two candidate routes 506, 508 for a mining vehicle between a start position 500 and an end position 502. In an example embodiment, an orientation aware A* planning algorithm may be used to find the candidate routes. In the first stage the candidate routes may be rough approximations that the vehicle is not guaranteed to be able to drive. The first stage may be run multiple times with different wall distance values to generate multiple route candidates for further optimization. The wall distance value means, for example, that the route cannot go within a specified distance to a wall.

FIG. 5B illustrates another example of a two-dimensional view of route planning according to an example embodiment. FIG. 5B illustrates a second stage of a determination of a collision free continuous route. In the second stage, at least map data associated with the tunnel system and vehicle information comprising at least kinematic restrictions and space restrictions associated with main moving body parts of the mining vehicle and a movable work device of the mining vehicle may be used to improve at least one candidate route of the plurality of candidate routes while satisfying the kinematic restrictions and space restrictions associated with the vehicle and the movable work device of the vehicle. Improving may comprise, for example, at least one of optimizing the route to maximize at least one key performance indicator as the reward function, minimizing time to arrival, minimizing energy consumption, minimizing movements or steering effort, maximizing distance to known obstacles etc. For example, the second stage may take into account mining vehicle acceleration and deceleration capabilities and the maximum speed of steering. It may also check that the route is clear from collisions by comparing the body envelopes to the floor details at that spot in the map data. Further, the second stage may comprise morphing and optimizing the route spline until the candidate route fulfills the drivability restrictions and mining vehicle limitations. A candidate route 510 from the improved at least one candidate route may then be chosen, based on at least one criterion, as the collision free continuous route.

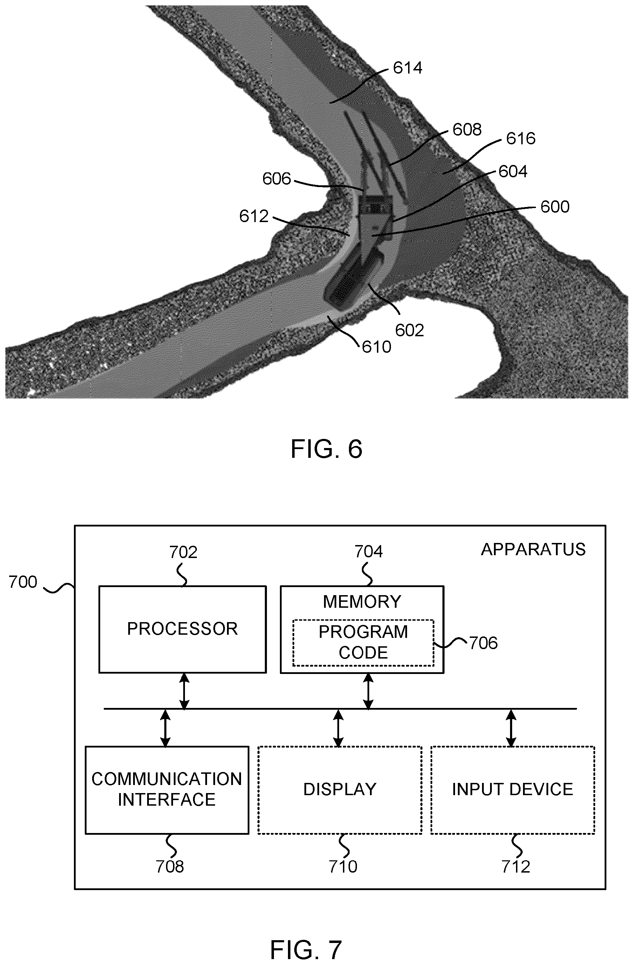

FIG. 6 illustrates an example visualization of a mining vehicle 600 travelling in a curve of a tunnel system according to an example embodiment. The mining vehicle 600 may comprise a first body such as rear body 602, a second body such as front body 604 and a work device 608 connected to booms or arms 606. Reference signs 602, 612 and 614 illustrate various envelopes required by various parts of the mining vehicle 600 when travelling a planned route. In general, an envelope is indicative of space required by the mining vehicle 600 at an associated route point. The route point, or another point of reference dependent on the route point, may be used as reference for the envelope. The route point or the reference point may be a center point of the vehicle (or vehicle portion), around which the envelope may be generated (based on the vehicle dimensions data and state of the vehicle).

A set of envelopes in a tunnel model may be visualized to represent the planned route trace of the vehicle when driving via the route points. This may comprise or refer to displaying a visualization of the trace based on the set of envelopes together with (and mapped to) visualization of related tunnel portion based on tunnel (or environment) model data. Hence, the space required by the vehicle at a set of route points along the route ahead may be illustrated to facilitate, for example, proactive monitoring and control of the vehicle well before the vehicle arrives at the give route points, or simulation of the planned route without travelling the route with the mining vehicle. Envelopes 610 and 612 represent the space required by the rear body 602. An envelope 614 represents the space required by the front body 604. An envelope 616 represents the space required by the work device 608.

FIG. 7 illustrates an example of an apparatus 700 configured to practice one or more example embodiments. The apparatus 700 may comprise, for example, a server, a controller workstation, a mobile unit, such as a mobile cellular device or other type of mobile communications device, a vehicle on-board control device, or other kind of appropriately configured data processing device configured to implement functionality described herein. Although the apparatus 700 is illustrated as a single device, it is appreciated that, wherever applicable, functions of the apparatus 700 may be distributed to a plurality of devices.

The apparatus 700 may comprise at least one processor 702. The at least one processor 702 may comprise, for example, one or more of various processing devices or processor circuitry, such as, for example, a co-processor, a microprocessor, a controller, a Digital Signal Processor (DSP), a processing circuitry with or without an accompanying DSP, or various other processing devices including integrated circuits such as, for example, an Application Specific Integrated Circuit (ASIC), a Field Programmable Gate Array (FPGA), a Microcontroller Unit (MCU), a hardware accelerator, a special-purpose computer chip, or the like.

The apparatus 700 may further comprise at least one memory 704. The at least one memory 704 may be configured to store, for example, computer program code or the like, for example, operating system software and application software. The at least one memory 704 may comprise one or more volatile memory devices, one or more non-volatile memory devices, and/or a combination thereof. For example, the at least one memory 704 may be embodied as magnetic storage devices (such as hard disk drives, floppy disks, magnetic tapes, etc.), optical magnetic storage devices, or semiconductor memories (such as mask ROM, PROM (programmable ROM), EPROM (erasable PROM), flash ROM, RAM (random access memory), etc.).

The apparatus 700 may further comprise a communication interface 708 configured to enable the apparatus 700 to transmit and/or receive information to/from other devices. In one example, the apparatus 700 may use the communication interface 708 to transmit or receive signaling information and data in accordance with at least one data communication or cellular communication protocol. The communication interface 708 may be configured to provide at least one wireless radio, such as, for example, a 3GPP mobile broadband connection (e.g. 3G, 4G, 5G, 6G etc.), or a wired connection.

The apparatus may further comprise a display 710 or an interface to which a display can be connected to. The apparatus may further comprise an input device 712, for example, a keyboard, a mouse etc., for receiving user input.

When the apparatus 700 is configured to implement some functionality, some component and/or components of the apparatus 700, for example, the at least one processor 702 and/or the at least one memory 704, may be configured to implement this functionality. Furthermore, when the at least one processor 702 is configured to implement some functionality, this functionality may be implemented using the program code 706 comprised, for example, in the at least one memory 704.

The functionality described herein may be performed, at least in part, by one or more computer program product components such as software components. According to an embodiment, the apparatus may comprise a processor or processor circuitry, for example, a microcontroller, configured by the program code when executed to execute the embodiments of the operations and functionality described herein. The program code 706 is provided as an example of instructions which, when executed by the at least one processor 702, cause performance of apparatus. Alternatively, or in addition, the functionality described herein can be performed, at least in part, by one or more hardware logic components. For example, and without limitation, illustrative types of hardware logic components that can be used include Field-programmable Gate Arrays (FPGAs), Application-Specific Integrated Circuits (ASICs), Application-Specific Standard Products (ASSPs), System-on-a-chip systems (SOCs), Complex Programmable Logic Devices (CPLDs), and Graphics Processing Units (GPUs).

The apparatus 700 may be configured to perform or cause performance of any aspect of the method(s) described herein. Further, a computer program may comprise instructions for causing, when executed, an apparatus to perform any aspect of the method(s) described herein. The computer program may be stored on a computer-readable medium. Further, the apparatus 700 may comprise means for performing any aspect of the method(s) described herein. In one example, the means comprises the at least one processor 702, the at least one memory 704 including the program code 706 (instructions) configured to, when executed by the at least one processor 702, cause the apparatus 700 to perform the method(s). In general, computer program instructions may be executed on means providing generic processing functions. The method(s) may be thus computer-implemented, for example based algorithm(s) executable by the generic processing functions, an example of which is the at least one processor 702. The means may comprise transmission and/or reception means, for example one or more radio transmitters or receivers, which may be coupled or be configured to be coupled to one or more antennas, or transmitter(s) or receiver(s) of a wired communication interface.

In an example embodiment, the apparatus 700 may be configured to obtain map data associated with a tunnel system of an underground worksite, to obtain a start position and an end position for a mining vehicle configured to operate in the tunnel system, to obtain mining vehicle information comprising at least kinematic restrictions and space restrictions associated with structural body members of the mining vehicle and a movable work device of the mining vehicle, the kinematic restrictions comprising movability limits of the movable work device, and to determine at least partly based on the map data, the start and end positions, and the mining vehicle information, a collision free continuous route between the start and end positions for the mining vehicle, the collision free continuous route having at least one collision free position for the movable work device within the movability limits of the movable work device along the collision free continuous route.

In an example embodiment, the apparatus 700 may be configured to control visualization of the determined collision free continuous route.

In an example embodiment, the apparatus 700 may be configured to control the mining vehicle to drive through the determined collision free continuous route.

In an example embodiment, the apparatus 700 may be configured to use at least the map data, the route start and end points and different wall distances values to determine a plurality of candidate routes between the start and end points, to use at least the map data, and the mining vehicle information to improve at least one candidate route of the plurality of candidate routes while satisfying the kinematic restrictions and space restrictions associated with the mining vehicle and the movable work device of the mining vehicle, and to choose, based on at least one criterion, a candidate route from the improved at least one candidate route as the collision free continuous route.

In an example embodiment, the apparatus 700 may be configured to determine the collision free continuous route before starting the collision free continuous route with the mining vehicle.

One or more of the above discussed examples and embodiments may enable a solution that in which a mining vehicle knows what is coming based on pre-planning the collision free continuous route. Further, one or more of the above discussed examples and embodiments may enable a solution in which the work device may be moved at required locations on a route. Further, one or more of the above discussed examples and embodiments may enable a solution in which the mining vehicle can do a transition freely on the route on the part of the route where more than one position of the work device is valid. Further, the mining vehicle does not have to change the position of the work device if it is more beneficial to minimize movements. Further, one or more of the above discussed examples and embodiments may enable a solution in which the mining vehicle is always able to drive every curve and even tight curves on the first try thus avoiding damages to the mining vehicle or to its parts and enabling quicker travelling in a tunnel system. Thus, there is no need, for example, for an operator of the mining vehicle himself/herself to make a decision to stop the vehicle and move the boom or parts of it to another position. Further, one or more of the above discussed examples and embodiments may enable that bigger mining vehicles can be used in smaller tunnels.

Any range or device value given herein may be extended or altered without losing the effect sought. Also, any embodiment may be combined with another embodiment unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The steps or operations of the methods described herein may be carried out in any suitable order, or simultaneously where appropriate. Additionally, individual blocks may be deleted from any of the methods without departing from the scope of the subject matter described herein. Aspects of any of the embodiments described above may be combined with aspects of any of the other embodiments described to form further embodiments without losing the effect sought.

The term 'comprising' is used herein to mean including the method, blocks, or elements identified, but that such blocks or elements do not comprise an exclusive list and a method or apparatus may contain additional blocks or elements.

As used in this application, the term 'circuitry' may refer to one or more or all of the following: (a) hardware-only circuit implementations (such as implementations in only analog and/or digital circuitry) and (b) combinations of hardware circuits and software, such as (as applicable) : (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation. This definition of circuitry applies to all uses of this term in this application, including in any claims.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from scope of this specification.

## Claims

1. An apparatus for a mining vehicle, the apparatus comprising:
at least one processor; and
at least one memory including computer program code,
the at least one memory and the computer program code configured to with the at least one processor, cause the apparatus at least to:
obtain map data associated with a tunnel system of an underground worksite;
obtain a start position and an end position for a mining vehicle configured to operate in the tunnel system;
obtain mining vehicle information comprising at least kinematic restrictions and space restrictions associated with structural body members of the mining vehicle and a movable work device of the mining vehicle, the kinematic restrictions comprising movability limits of the movable work device; and
determine at least partly based on the map data, the start and end positions, and the mining vehicle information, a collision free continuous route between the start and end positions for the mining vehicle, the collision free continuous route having at least one collision free position for the movable work device within the movability limits of the movable work device along the collision free continuous route.

2. The apparatus according to claim 1, wherein the at least one memory and the computer program code are further configured to with the at least one processor, cause the apparatus to:
control visualization of the determined collision free continuous route.

3. The apparatus according to claim 1 or 2, wherein the at least one memory and the computer program code are further configured to with the at least one processor, cause the apparatus to:
control the mining vehicle to drive through the determined collision free continuous route.

4. The apparatus according to any of claims 1 - 3, wherein the at least one memory and the computer program code are further configured to with the at least one processor, cause the apparatus to:
use at least the map data, the route start and end points and different wall distances values to determine a plurality of candidate routes between the start and end points;
use at least the map data, and the mining vehicle information to improve at least one candidate route of the plurality of candidate routes while satisfying the kinematic restrictions and space restrictions associated with the mining vehicle and the movable work device of the mining vehicle; and
choose, based on at least one criterion, a candidate route from the improved at least one candidate route as the collision free continuous route.

5. The apparatus according to any of claims 1 - 4, wherein the movability limits of the movable work device limit horizontal and/or vertical movability of the movable work device.

6. The apparatus according to any of claims 1 - 5, wherein the movability limits of the movable work device set at least two allowable preset positions for the movable work device.

7. The apparatus according to any of claims 1 - 6, wherein the movability limits of the movable work device allow the movable work device to be moved steplessly within the movability limits.

8. The apparatus according to any of claims 1 - 7, wherein the space restriction information associated with the mining vehicle comprises space restriction information separately for a first body and a second body of the mining vehicle.

9. The apparatus according to any of claims 1 - 8, wherein the movable work device comprises at least one boom or a bucket.

10. The apparatus according to any of claims 1 - 9, wherein the at least one memory and the computer program code are further configured to with the at least one processor, cause the apparatus at least to:
determine the collision free continuous route before starting the collision free continuous route with the mining vehicle.

11. The apparatus according to any of claims 1 - 10, wherein the start position and/or the end position comprises direction and/or orientation of the mining vehicle.

12. The apparatus according to any of claims 1 - 11, wherein the start position and/or the end position comprises a position for each structural body member of the mining vehicle and/or the work device.

13. A mining vehicle comprising an apparatus according to any of claims 1 - 12.

14. A method comprising:
obtaining map data associated with a tunnel system of an underground worksite;
obtaining a start position and an end position for a mining vehicle configured to operate in the tunnel system;
obtaining mining vehicle information comprising at least kinematic restrictions and space restrictions associated with structural body members of the mining vehicle and a movable work device of the mining vehicle, the kinematic restrictions comprising movability limits of the movable work device; and
determining at least partly based on the map data, the start and end positions, and the mining vehicle information, a collision free continuous route between the start and end positions for the mining vehicle, the collision free continuous route having at least one collision free position for the movable work device within the movability limits of the movable work device along the collision free continuous route.

15. A computer program comprising instructions for causing an apparatus to carry out the method of claim 14.
